(19) Europäisches Patentamt
European Patent Office
Office européen des brevets

(11) **EP 0 522 718 B1**

(12) **EUROPEAN PATENT SPECIFICATION**

(45) Date of publication and mention
of the grant of the patent:
**24.01.1996 Bulletin 1996/04**

(51) Int Cl.6: **F16F 1/06**, F16F 15/12

(21) Application number: **92305485.2**

(22) Date of filing: **15.06.1992**

(54) **Torsional vibration damper**

Torsionsschwingungsdämpfer

Amortisseur de vibrations torsionnelles

(84) Designated Contracting States:
**DE FR GB**

(30) Priority: **10.07.1991 US 728181**

(43) Date of publication of application:
**13.01.1993 Bulletin 1993/02**

(73) Proprietor: **BORG-WARNER AUTOMOTIVE TRANSMISSION AND ENGINE COMPONENTS CORPORATION**
**Sterling Heights, Michigan 48311-8022 (US)**

(72) Inventors:
• **Yanko, John P.**
**Shelby Twsp., Michigan 48316 (US)**
• **Hall, David A.**
**Clawson, Michigan 48017 (US)**

(74) Representative: **Allden, Thomas Stanley et al London WC1V 7LE (GB)**

(56) References cited:
DE-U- 8 530 850          FR-A- 1 507 552
FR-A- 2 495 256          US-A- 2 026 007
US-A- 2 695 169          US-A- 4 148 469

## Description

This invention relates to torsional vibration dampers.

The use of a torsional vibration damper conventionally has been an accepted way to absorb undesirable torsional vibrations from the vehicle engine or transmission input during operation of a motor vehicle. Initially, vibration dampers have been designed with springs in parallel and in series with a capacity to absorb torsional shock or vibration emanating from an engine or transmission input without the spring in the vibration damper being fully compressed to its solid height. However, as engines became more efficient and more powerful, the vibration dampers had to absorb increased torsional loads and the springs in the vibration dampers compressed to a greater extent to absorb the increased loads.

Because many of the springs were not designed to be fully compressed, many of these torsional vibration dampers would have a stop limit built in. However, the stop limit adds extra complexity to the torsional vibration damper and also takes room that can otherwise be used to house more shock absorbing springs.

Due to packaging constraints, the torsional vibration dampers increased capacity must be achieved without an increase in size. Hence, what is needed is a torsional vibration damper that has its springs designed to be durable and to be fully compressed thereby maximizing the capacity for vibration absorption and eliminating the necessity for a separate limit stop built into the torsional vibration damper.

A spring has been defined as a machine element for storing energy as a function of displacement. Force applied to a spring member causes it to deflect through a certain displacement thus absorbing energy. A spring may have any shape and may be formed from any elastic material. In particular, coil springs are commonly utilized in damping arrangements in clutch plates and torsional dampers.

The springs in the damper provide vibration control by reducing stiffness of a drive line. Additional spring wire stressed in torsion lowers the drive line stiffness. Thus, the springs, by lowering the stiffness of the drive line, provide vibration control from impulses or shocks in the driveline of an automotive vehicle between the vehicle engine and the transmission.

A helical spring is formed from a bar or wire, commonly with uniform cross section, which is wound in a helix. Usually, the last turn at each end of the spring is modified to have a planar end surface lying in a plane perpendicular to the helix axis, and force can then be applied to the bearing surfaces of the end coils to place the helix in compression. Springs may be classified into several varieties with the variation in the end coil providing the difference. A plain end for a coil spring has a constant pitch for both the active coils and the end coils with the wire cut off generally square to the axis of the wire. The end coils can then be ground square to the spring axis, providing flat bearing surfaces. On the other hand, a closed end spring has the final coil bent so that at least a portion of the end coil is in contact with the adjacent active coil of the spring. In this version also, the end coil can be ground flat to provide a bearing surface for the spring.

Commonly, springs that have been designed to be fully compressed are closed end springs that have their final coil having a pitch equal to the thickness of the wire such that non-torsional bending forces are minimized on each coil. In grinding this end coil, a compromise must be made with respect to the arcuate extent of the coil which is ground perpendicular to the axis of the spring. A full 360° grind has been impractical. If the full 360° of the end coil were to be ground, the end tip would be extremely thin and would be damaged or broken off by the forces exerted during the use of the spring. As a lesser arcuate sector of the end coil is ground, a greater tip thickness is produced; however, the seating area of the spring is also reduced and the increased thickness of the tip produces heavy loading on the first active coil when the spring is fully compressed. These conflicting limitations result in a very narrow range of acceptability of grinding and are difficult to meet in production.

In accordance with the present invention as claimed, there is provided a torsional vibration damper comprising a torque input member, a reaction output member, the two members having spring seats and forming a plurality of spring retainer cages, the cages being circumferentially spaced about a central axis of the torsional damper, and a coil spring seated in each cage; the coil spring being formed from wire having a uniform thickness along its length, the coil spring having a plurality of active coils having a predetermined pitch greater than the thickness of the wire with a predetermined deflection per coil, the coil spring having an end coil section with an arcuate flattened end surface formed substantially perpendicular to a longitudinal axis of the coil spring, the end coil section extending for less than a full 360° turn. A distal tip of the end coil section is axially spaced from an active coil adjacent thereto to form a gap therebetween. Such a torsional vibration damper is known from FR-A-2 495 256. According to the invention such a damper is improved by the end coil section having a pitch substantially equal to the thickness of the wire and by the tip having a thickness being at least one quarter of the thickness of the wire.

A preferred embodiment of the invention provides a torsional vibration damper for automotive vehicles having a torque input member such as a clutch plate or fly wheel coaxially mounted to an output element such as a driven hub. The hub and input member are pivotably mounted relative to each other for a limited amount. The torque input member and hub also form a plurality of cages for mounting a plurality of helical springs in parallel, in series or in a combination of springs both of parallel and in series about the centre axis of the torsional vibration damper. One or more helical springs are mounted in each cage designed to be completely compressed within the cage to a solid height. As the input member pivotably moves with respect to the output hub, the seating surfaces of the respective input and output members compress the helical spring members such that shocks and vibrations are absorbed by the spring members.

Each helical coil spring has a distal tip end of sufficient thickness to withstand impacts imposed during use and yet provide an adequate seating area. A coil spring has an end bent to provide a pitch equal to the thickness of the spring material. The end section of this reduced pitch relative to the active coils extends through an arc of less than 360°, unlike the prior art in which the reduced pitch end section extended for a full turn. This results in a gap between the distal tip end and the adjacent active coil when the spring is unloaded. The gap is a predetermined fraction of the deflection per coil of the spring. The fraction is linearly, inversely proportional to the seating area of the spring which is flattened by grinding. The spring distal tip has a thickness which is the above identified fraction of the thickness of the spring wire. For a spring wire having a circular cross-section, the thickness of the wire is the diameter of the wire.

This arrangement results in a helical coil spring with an adequate seating area to avoid offsetting forces on the spring during deflection and with a tip thickness adequate to withstand the forces imposed during use.

In order that the invention may be well understood the preferred embodiment thereof, which is given by way of example, will now be described in more detail and with reference to the accompanying drawings, in which :

FIGURE 1 is a front elevational partially segmented view of a lock-up clutch torsional vibration damper for a torque converter illustrating one embodiment of the invention;
FIGURE 2 is a cross-sectional view taken along lines 2-2 shown in FIGURE 1;
FIGURE 3 is a side-elevational view of a coiled spring found in the prior art;
FIGURE 4 is an end view of the spring shown in Figure 3;
FIGURE 5 is a side elevational view of another spring in the prior art;
FIGURE 6 is an end view of the coil spring shown in Figure 5;
FIGURE 7 is a side-elevational view of the coil spring member shown in FIGURE 1;
FIGURE 8 is an enlarged and fragmentary side-elevational view of the spring shown in FIGURE 7 illustrating the end coil;
FIGURE 9 is an end view of the coil spring shown in FIGURE 7;
FIGURE 10 is a side-elevational view of the spring shown in FIGURE 7 at a full solid compressed condition;
FIGURE 11 is a fragmentary front elevational and partially segmented view of another torsional vibration damper; and
FIGURE 12 is a fragmentary cross-sectional view taken along line 12-12 shown in FIGURE 11.

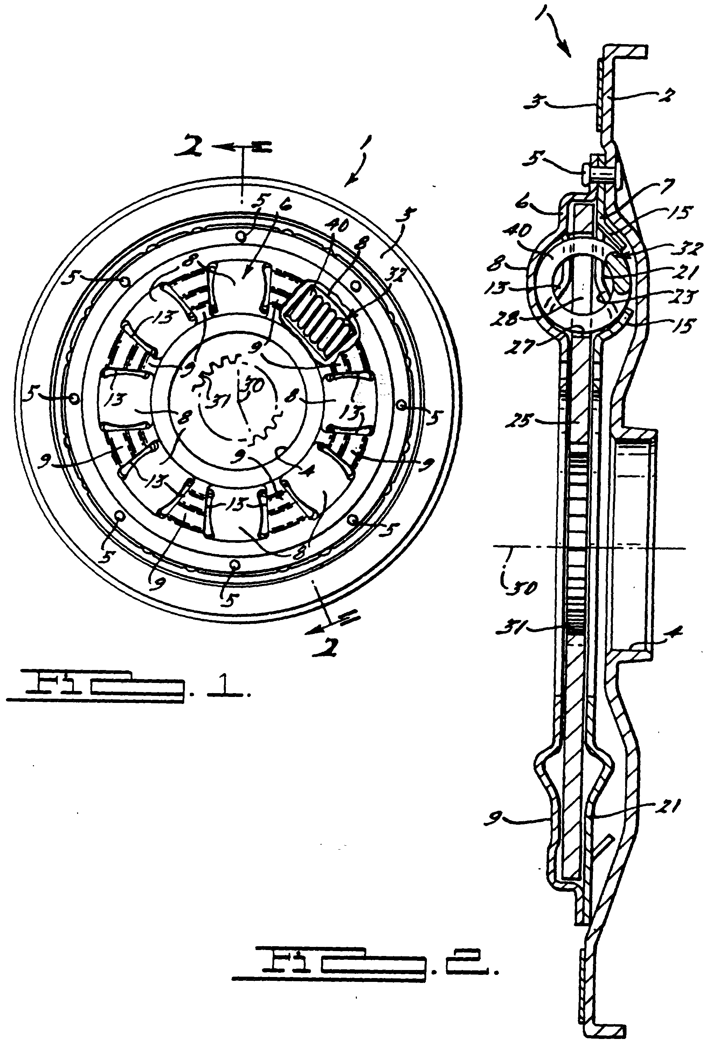

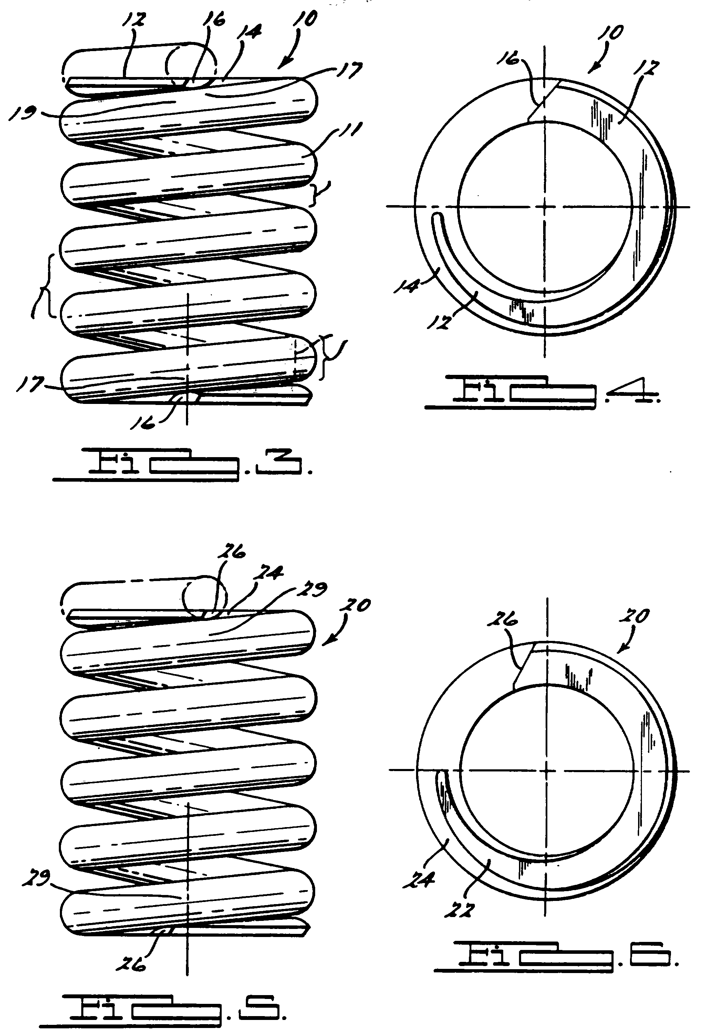

Referring now to Figures 1 and 2, a vibration damper assembly 1 is secured to a torque input member such as a clutch plate 2 that carries friction linings 3 and has a central opening 4. A plurality of rivets 5 secure the torque input member 2 to a pair of spring retainer plates 6 and 7. The plate 6 has a plurality of arcuate embossed sections 8 contoured to receive a laterally disposed spring. Interspersed between the arcuate embossed sections 8 are drive straps 9 that have edges 13 forming spring seats.

The spring retainer retainer plate 7 has spring retaining lips 15 positioned to be opposite the arcuate embossed sections 8 interspersed with driving straps 21 that have edges 23 forming spring seats.

A reactor plate 25 is rotatably mounted between the spring retaining plates 6 and 7. The reactor plate 25 has a plurality of slots 27 that are normally aligned with the arcuate embossed sections 8 and lips 15. Each edge 28 of slots 27 also forms a spring seat. The centre opening 31 is splined to be attached to an output drive shaft.

A plurality of coil springs 40 are positioned within the spring cage 32 defined by the embossed arcuate section 8, slots 27 and lips 15. The cages 32 are circumferentially spaced about the coaxial centre 30 of the torsional vibration damper 1. The springs 40 are placed in parallel relationship with each other with each spring having its end sections seated against the edge 28 and/or edge 23.

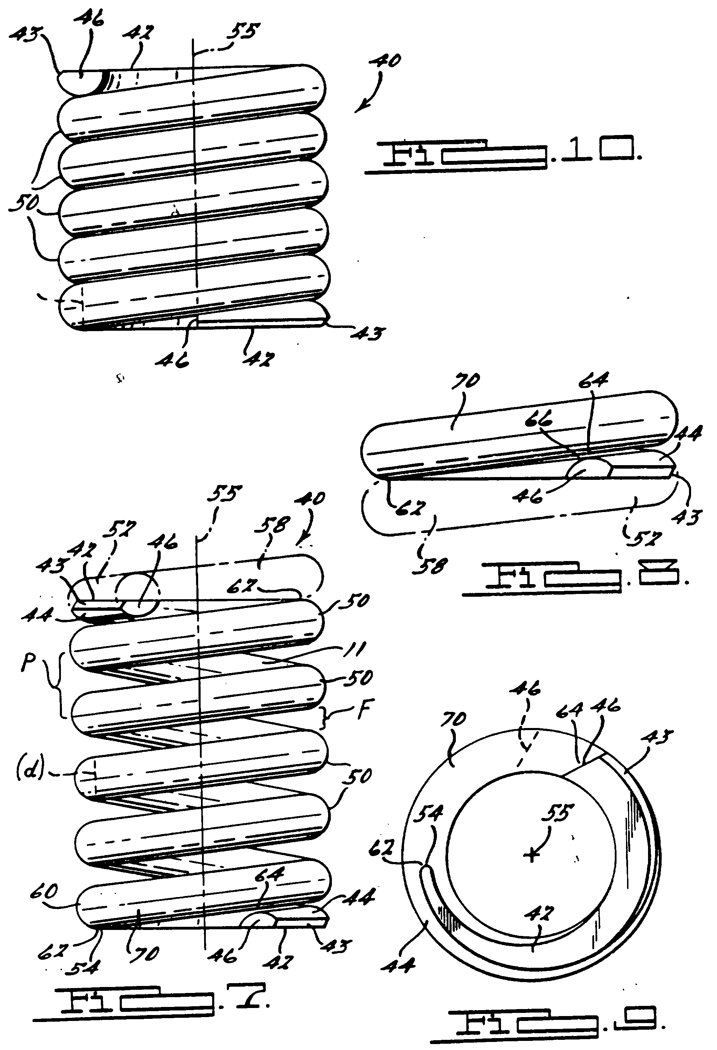

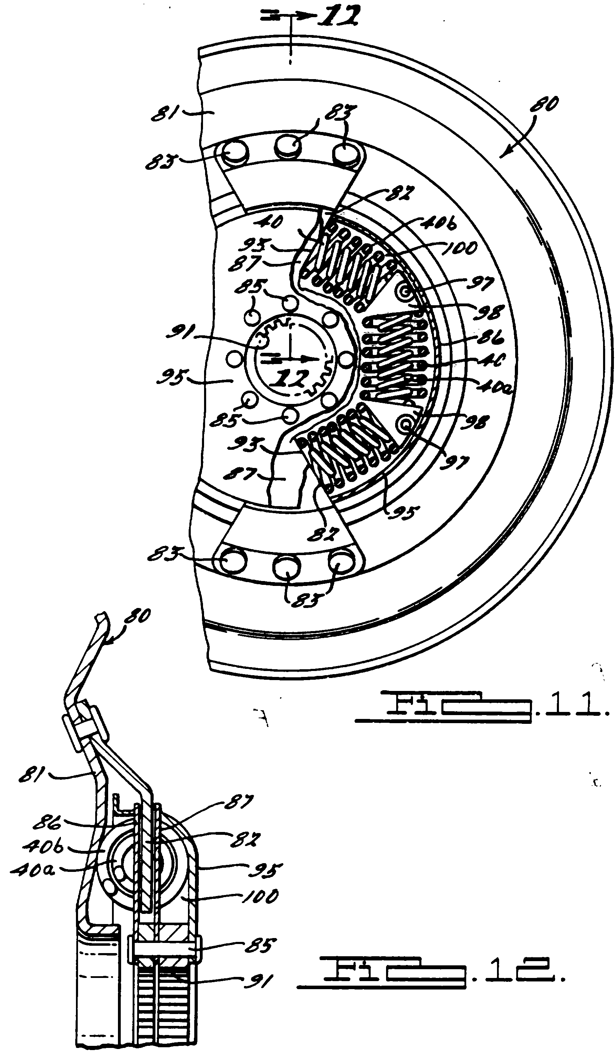

Referring now to Figures 3-6, typical prior art springs that have been placed in cages 32. Referring particularly to Figures 3 and 4, a closed coil spring has a minimal amount of flattened surface 12 at its end coil 14 and consequently a distal tip 16 with maximum allowable thickness. A spring having a thicker tip would be unacceptable due to bending stresses that would be excessively high in a region 17 where the distal tip 16 abuts the adjacent active coil 19 when the spring is compressed to its solid height. The end coil 14 extends for 360° and has a pitch that is equal to the diameter of the wire 11 so that the tip 16 contacts the adjacent active coil 19 even when the spring is unstressed.

Another spring is shown in Figures 5 and 6 with an end coil 24 having a flattened surface 22 that extends a greater arcuate extent than the flattened surface 12 of the spring shown in Figures 1 and 2. Consequently, the tip 26 is thinner. This tip has a minimum acceptable thickness. If the tip were thinner it would be too fragile and might break under load. The arcuate extent of the flattened surface 12 of the spring of Figures 3 and 4 and the flattened surface 22 of the spring of Figures 5 and 6 only differ by a few degrees and in production it is very difficult to produce springs falling between these narrow limits.

A coil spring 40, as shown in Figures 1 and 2, is illustrated in detail in Figures 7, 8, 9 and 10. The spring 40 is made from wire 11 of diameter (d) with a plurality of active coils 50 each having a pitch P which is greater than the diameter (d) of the wire. As a consequence, each of the active coils has a deflection per coil, i.e., a gap between active coils which is labeled F.

An arcuate flat surface 42 which is formed by grinding away a coil section 52 is shown in Figure 7. The surface 42 is substantially perpendicular to the longitudinal axis 55 of the spring 40. The end coil 44 and the flat surface 42 terminate at a distal tip 46.

The end coil 44, measured from a point 62 at which the pitch first substantially equals the diameter (d) of the wire, to the distal tip 46, extends for less than 360°. The ground flattened surface 42, from a point 54 to the distal tip 46, likewise extends for less than 360°, and extends fully within the end coil section which has a pitch. If a full coil turn were to be projected as shown by a phantom section 58, the tip 46 at the end of a full end coil would then abut the beginning of the end coil at a contact point 62. In other words, the partial end coil 44 is projectedly closed. However, the tip 46 terminates before the section 58 abuts at the point 62 such that a gap 66, as shown in more detail in Figure 8, exists between the tip 46 and an adjacent coil portion 64. The axial position of the end surface 42 is aligned with the projected contact point 62.

The arcuate flattened end coil 44 is less than one coil turn. The flattened end coil section 44 spans between 170° and 300°. Desirably, the flattened end coil can be between 190° and 270°. In one application, the arcuate span is approximately 247°. It follows that the tip thickness is preferably at least 25% of the wire diameter. The surface 42 is substantially perpendicular to the central axis 55.

The tip thickness is related to the arc of the flattened surface. The tip thickness substantially equals

$$\left[1 - \frac{arcuate\ flattened\ surface\ °}{360°}\right] \times wire\ diameter\ (d)$$

The term

$$\frac{arcuate\ flattened\ surface°}{360°}$$

can be referred to as a fraction (f). The phrase "arcuate flattened surface °" can also be referred to as the grind in degrees. If a transition coil section 70 has an average pitch significantly different than the active coil, the gap is measured

$$(1-f) \times \frac{the\ averaged\ deflection\ per\ coil}{turn\ for\ the\ transition\ coil\ section}$$

The gap 66 between the tip 46 and the point 64 depends on the pitch of the transition section 70 from the starting point 54 of the flattened arcuate section to the point 64 adjacent the tip 46. If the section 70 has a pitch equal to the deflection (F) of the active coils such that the pitch changes at the point 54, the gap measures:

$$(1-f) \times deflection\ of\ the\ active\ coils\ (F)$$

The two tips 46 at the bottom and the top end coils are axially positioned such that they do not complete a full coil turn, i.e., they do not overlap in the axial direction. The total number of coils, i.e., the number of active coils, end coils and transition coil sections add up to slightly less than an entire turn, i.e., preferably less than an entire turn by an amount less than 1/4. In one embodiment, the amount should be approximately 1/10 less than an entire turn.

When manufacturing tolerances are taken into account to determine the minimum acceptable gap and minimum acceptable tip thickness, the maximum allowable arcuate flattened surface, the minimum allowable deflection per coil (F) and the minimum allowable wire diameter (d) should be used in the above calculations.

When the spring 40 is compressed to solid height as shown in Figure 10, the active coils and end coils nest against each other with a minimum amount of localized stresses and non-torsional bending of the coils.

It has been determined and tested that springs according to this construction used in a torsion spring damper have significant increased durability and reliability, even when the torsion spring damper fully compresses the spring between the seats 13, 23 and 28 within the cages 32.

In manufacturing, each spring 40 is coiled on a conventional spring coiling machine with the wire being cut off and bent short of contacting the next adjacent coil. On removal from the coiling machine, the spring is stressed relieved, the ends are ground off, to provide a bearing surface and the ends are chamfered as shown in Figures 7-10 at a section 43. The springs for some applications are shot peened to improve durability.

While the torsional vibration damper 1 shown in Figure 1 shows a single spring 40 in each cage 32 with the springs 40 all being parallel, other spring arrangements may be desirable for certain applications.

The torsional vibration damper may seat two springs in parallel with each other in each cage 32. The springs may be coaxially mounted with one nested inside another. Each spring has end coil sections as above described.

Referring now to Figures 11 and 12, another torsional vibration damper 80 is shown using sprints 40a and 40b. The springs 40a and 40b have end coil sections constructed in the same fashion as the spring 40 described above. Three springs 40a forming a spring set are connected in series between a seat 82 fixed to an input member by rivets 83 and a seat 93 of reactive members 86 and 87. Three springs 40b nested in the springs 40a are also connected in series in the same fashion. The reactive members 86 and 87 are assembled by rivets 85 to an output hub 91. A spring retaining shell 95 is fixed to the reactive member 87.

A pair of floating spring seats 98 are slidably movable in a spring cage 100 defined between an input member 80 and the shell 95. The seats 98 can have bearings 97 rolling against the shell 95. The floating seats 98 are interposed between two end coil sections of two adjacent springs 40a and two adjacent springs 40b.

Identical sets of springs 40a and 40b are positioned between the seats 93 and 82 on the left side of torsional vibration damper. For simplicity of the drawing, these springs are not shown in Figure 11.

The two spring sets formed by the springs 40a are in parallel to each other. The two spring sets formed by the springs 40b are also in parallel with each other. Furthermore, the spring sets formed by the springs 40a are in parallel to the spring sets formed by the springs 40b. Thus, the torsional vibration damper 80 has a combination of springs both in series and in parallel.

## Claims

1. A torsional vibration damper comprising a torque input member (2, 6, 7), a reaction output member (25), the two members (2, 6, 7, 25) having spring seats (13, 23, 28) and forming a plurality of spring retainer cages (32), the cages (32) being circumferentially spaced about a central axis (30) of the torsional damper (1), and a coil spring (40) seated in each cage (32); the coil spring (40) being formed from wire (11) having a uniform thickness (d) along its length, the coil spring (40) having a plurality of active coils (50) having a predetermined pitch (p) greater than the thickness (d) of the wire (11) with a predetermined deflection (F) per coil, the coil spring (40) having an end coil section (44) with an arcuate flattened end surface (42) formed substantially perpendicular to a longitudinal axis (55) of the coil spring (40), the end coil section (44) extending for less than a full 360° turn, a distal tip (46) of the end coil section (44) being axially spaced from an active coil (64) adjacent thereto to form a gap (66) therebetween, characterized in that the end coil section (44) has a pitch substantially equal to the thickness (d) of the wire (11) and that the tip (46) has a thickness being at least one quarter (1/4) of the thickness (d) of the wire (11).

2. A torsional vibration damper as claimed in claim 1, wherein the distal tip (46) has a thickness approximately equal to

$$\left[1 - \frac{arcuate\ flattened\ surface\ °}{360°}\right] \times wire\ diameter\ (d).$$

3. A torsional vibration damper as claimed in claim 1 or claim 2, wherein the gap (66) between the distal tip (46) and the adjacent active coil (64) is approximately equal to

$$\left[1 - \frac{arcuate\ flattened\ surface\ °}{360°}\right] \times \frac{deflection\ of\ the}{active\ coils\ (F)}.$$

4. A torsional vibration damper as claimed in claim 1 or claim 2, wherein the gap (66) between the distal tip (46) and the adjacent active coil (64) is approximately equal to

$$\left[1 - \frac{arcuate\ flattened\ surface\ °}{360°}\right] \times \frac{the\ averaged\ deflection}{per\ coil\ turn\ for\ the}{transition\ coil\ section}.$$

wherein the transition coil section is defined between the starting point (54) of the arcuate flattened end surface (42) and the point of the coil (64) axially adjacent the distal tip (46).

5. A torsional vibration damper as claimed in claim 1, wherein due to manufacturing tolerances the gap (66) must be greater than

$$\left[1 - \frac{maximum\ allowable\ arcuate\ flattened\ surface\ °}{360°}\right] \times \frac{minimum\ allowable}{deflection\ (F)\ per\ coil}.$$

and the tip (46) thickness must be greater than

EP 0 522 718 B1

$$\frac{[1-maximum\ allowable\ arcuate\ flattened\ surface]}{360^\circ} \times minimum\ wire\ diameter\ (d).$$

6. A torsional vibration damper as claimed in any of the preceding claims, wherein the flattened end surface (42) has an arcuate span between 190° and 270°.

7. A torsional vibration damper as claimed in claim 6, wherein the flattened end surface (42) has its arcuate span approximately equal to 247°.

8. A torsional vibration damper as claimed in any of the preceding claims, wherein the end coil sections (44), the transition coil sections and the active coils (50) add up to a total number of coils less than a whole integer by an amount less than 1/4.

9. A torsional vibration damper as claimed in claim 8, wherein said total number of coils is less than a whole integer by an amount approximately equal to 1/10.

10. A torsional vibration damper as claimed in any of the preceding claims, wherein the flattened end surface (42) is positioned to be axially aligned with a projected contact point (62) at the beginning of the end coil section (44), the contact point (62) being the point of contact of the tip (46) if the end coil section (44) at a pitch was projected to complete a 360° turn and touch the beginning of such an end coil section (44).

11. A torsional vibration damper as claimed in any of the preceding claims, wherein each coil spring (40) is mounted in parallel with respect to each other with each coil spring (40) having one axial end coil section (44) abutting a spring seat (13, 23) of the torque input member (2, 6, 7) and a second axial end coil section (44) abutting a spring seat (28) of the reaction output member (25).

12. A torsional vibration damper as claimed in any of claims 1 to 10, wherein at least two said coil springs (40a, 40b) are mounted in series with respect to each other with one said axial end coil section (44) of at least two such coil springs (40a, 40b) seated against a floating seat member (98) interposed therebetween.

13. A torsional vibration damper as claimed in any of claims 1 to 10, wherein said coil springs (40a, 40b) are mounted in a combination of series and parallel assemblies with respect to each other; the coil spring assemblies that are mounted in series having a floating seat member (98) interposed between two said coil springs (40a, 40b) with one axial end coil section (44) of each spring (40a, 40b) abutting the floating seat member (98); the coil spring assemblies that are mounted in parallel with each other having one axial end coil section (44) seated against a spring seat (82) of the input member (82) and a second axial end coil section (44) seated against a spring seat (93) of the reaction output member (86, 87).

**Patentansprüche**

1. Torsionsschwingungsdämpfer mit einem Drehmoment-Eingangsteil (2,6,7), einem Reaktionsausgangsteil (25), wobei die beiden Teile (2,6,7,25) Federsitze (13,23,28) aufweisen und mehrere Federhaltekäfige (32) bilden, die Käfige (32) um eine zentrale Achse (30) des Torsionsdämpfers (1) in Umfangsrichtung verteilt sind, und einer Schraubenfeder (40), die in jedem Käfig (32) angeordnet ist; wobei die Schraubenfeder (40) aus Draht (11) gleichförmiger Dicke (d) über seiner Länge hergestellt ist, die Schraubenfeder (40) eine Anzahl wirksamer Windungen (50) einer vorgegebenen Steigung (p) aufweist, die größer als die Dicke (d) des Drahtes (11) bei vorgegebener Biegung (F) pro Windung ist, die Schraubenfeder (40) einen Endwindungsabschnitt (44) mit einer gekrümmten abgeflachten Endfläche (42) aufweist, die im wesentlichen senkrecht zu einer Längsachse (55) der Schraubenfeder (40) verläuft, der Endwindungsabschnitt (44) sich um weniger als eine volle 360°-Windung erstreckt, und ein distales Ende (46) des Endwindungsabschnittes (44) axial beabstandet zu einer daran angrenzenden wirksamen Windung (64) ist, um dazwischen einen Spalt (66) zu bilden, dadurch gekennzeichnet, daß der Endwindungsabschnitt (44) eine Steigung hat, die im wesentlichen gleich der Dicke (d) des Drahtes (11) ist, und daß das Ende (46) eine Dicke hat, die mindestens ein Viertel (1/4) der Dicke (d) des Drahtes (11) beträgt.

2. Torsionsschwingungsdämpfer nach Anspruch 1, bei dem das distale Ende (46) eine Dicke hat, die näherungsweise gleich

6

$$\left[1 - \frac{\text{gekrümmte abgeflachte Fläche}^{\bullet}}{360^{\circ}}\right] \times \text{Drahtdurchmesser (d)}$$

ist.

3. Torsionsschwingungsdämpfer nach Anspruch 1 oder 2, bei dem der Spalt (66) zwischen dem distalen Ende (46) und der angrenzenden wirksamen Windung (64) näherungsweise gleich

$$\left[1 - \frac{\text{gekrümmte abgeflachte Fläche}^{\bullet}}{360^{\circ}}\right] \times \text{Biegung der aktiven Windungen}$$

ist.

4. Torsionsschwingungsdämpfer nach Anspruch 1 oder 2, bei dem der Spalt (66) zwischen dem distalen Ende (46) und der angrenzenden aktiven Windung (64) näherungsweise gleich

$$\left[1 - \frac{\text{gekrümmte abgeflachte Fläche}^{\bullet}}{360^{\circ}}\right] \times \begin{array}{l}\text{durchschnittliche Biegung pro} \\ \text{Windung für den Übergangs-} \\ \text{windungsabschnitt}\end{array}$$

ist, worin der Übergangswindungsabschnitt definiert ist zwischen dem Ausgangspunkt (54) der gekrümmten abgeflachten Endfläche (42) und dem an dem distalen Ende (46) axial angrenzenden Punkt der Windung (64).

5. Torsionsschwingungsdämpfer nach Anspruch 1, bei dem aufgrund von Herstellungstoleranzen der Spalt (66) größer sein muß als

$$\left[1 - \frac{\text{maximal zulässig gekrümmte abgeflachte Fläche}^{\bullet}}{360^{\circ}}\right] \times \begin{array}{l}\text{maximal zulässige} \\ \text{Biegung (F) per Windung}\end{array}$$

und die Dicke des Endes (46) größer sein muß als

$$\left[1 - \frac{\text{maximal zulässig gekrümmte abgeflachte Fläche}^{\bullet}}{360^{\circ}}\right] \times \begin{array}{l}\text{minimaler Draht-} \\ \text{durchmesser (d)}\end{array}.$$

6. Torsionsschwingungsdämpfer nach einem der vorhergehenden Ansprüche, bei dem die abgeflachte Endfläche (42) eine Bogenspannweite zwischen 190° und 270° hat.

7. Torsionsschwingungsdämpfer nach Anspruch 6, dadurch gekennzeichnet, daß die Bogenspannweite der abgeflachten Endfläche (42) ungefähr gleich 247° ist.

8. Torsionsschwingungsdämpfer nach einem der vorhergehenden Ansprüche, bei dem die Endwindungsabschnitte (44), die Übergangswindungsabschnitte und die wirksamen Windungen (50) sich zu einer Gesamtwindungszahl addieren, die um einen Betrag von weniger als 1/4 kleiner als eine ganze natürliche Zahl ist.

9. Torsionsschwingungsdämpfer nach Anspruch 8, bei dem die Gesamtwindungszahl um einen Betrag von näherungsweise 1/10 kleiner als eine ganze natürliche Zahl ist.

10. Torsionsschwingungsdämpfer nach einem der vorhergehenden Ansprüche, bei dem die abgeflachte Endfläche (42) so angeordnet ist, daß sie zu einem vorstehenden Kontaktpunkt (62) an dem Anfang des Endwindungsabschnittes (44) axial ausgerichtet ist, wobei der Kontaktpunkt (62) derjenige Punkt der Berührung des Endes (46) ist, bei dem der Endwindungsabschnitt (44) bei einer Steigung zur Vervollständigung einer 360° Windung projiziert und den Anfang eines derartigen Endwindungsabschnittes (44) berühren würde.

**11.** Torsionsschwingungsdämpfer nach einem der vorhergehenden Ansprüche, bei dem die Schraubenfedern (40) jeweils parallel zueinander angebracht sind, wobei jede Schraubenfeder (40) einen axialen Endwindungsabschnitt (44), der an einem Federsitz (13,23) des Drehmoment-Ein-gangsteiles (2,6,7) anliegt, und einen zweiten axialen Endwindungsabschnitt (44) aufweist, der an einem Federsitz (28) des Reaktionsausgangsteiles (25) anliegt.

**12.** Torsionsschwingungsdämpfer nach einem der Ansprüche 1 bis 10, bei dem mindestens zwei Schraubenfedern (40a,40b) in Reihe geschaltet angebracht sind, wobei ein axialer Endwindungsabschnitt (44) von mindestes zwei Schraubenfedern (40a,40b) an einem dazwischen angeordneten schwimmenden Anlageteil (98) anliegt.

**13.** Torsionsschwingungsdämpfer nach einem der Ansprüche 1 bis 10, bei dem die Schraubenfedern (40a,40b) kombiniert in reihen- und parallelgeschalteten Anordnungen bezüglich einander gelagert sind, wobei die reihengeschalteten Schraubenfederanordnungen ein schwimmendes Anlageteil (98) aufweisen, das zwischen zwei Schraubenfedern (40a,40b) angeordnet ist, wobei ein axialer Endwindungsabschnitt (44) jeder Feder (40a,40b) an dem schwimmenden Anlageteil (98) anliegt, und wobei die parallelgeschalteten Schraubenfederanordnungen einen axialen Endwindungsabschnitt (44), der an einem Federsitz (82) des Eingangsgliedes (82) anliegt, und einen zweiten axialen Endwindungsabschnitt (44), der an einem Federsitz (93) des Reaktionsausgangsteils (86,87) anliegt, aufweisen.

## Revendications

**1.** Amortisseur de vibrations torsionnelles comprenant un élément d'entrée de couple (2, 6, 7), un élément de réaction de sortie (25), les deux éléments (2, 6, 7, 25) comportant des sièges de ressort (13, 23, 28) et formant une pluralité de cages de retenue de ressort (32), les cages (32) étant espacées suivant la circonférence autour d'un axe central (30) de l'amortisseur de torsion (1), et un ressort à boudin (40) logé dans chaque cage (32), le ressort à boudin (40) étant formé à partir de fil (11) ayant une épaisseur uniforme (d) sur toute sa longueur, le ressort à boudin (40) comportant une pluralité de spires actives (50) ayant un pas prédéterminé (p) supérieur à l'épaisseur (d) du fil (11) avec une flexion prédéterminée (F) par spire, le ressort à boudin (40) comportant une partie de spire d'extrémité (44) avec une surface d'extrémité aplatie incurvée (42) formée de manière sensiblement perpendiculaire à un axe longitudinal (55) du ressort à boudin (40), la partie de spire d'extrémité (44) s'étendant sur moins d'un tour complet de 360°, un bout distal (46) de la partie de spire d'extrémité (44) étant espacé axialement d'une spire active (64) qui lui est adjacente afin de former un intervalle (66) entre celles-ci, caractérisé en ce que la partie de spire d'extrémité (44) présente un pas sensiblement égal à l'épaisseur (d) du fil (11) et en ce que le bout (46) présente une épaisseur au moins égale au quart (1/4) de l'épaisseur (d) du fil (11).

**2.** Amortisseur de vibrations torsionnelles selon la revendication 1, dans lequel le bout distal (46) présente une épaisseur approximativement égale à

$$\left[ 1 - \frac{\text{surface aplatie incurvée °}}{360°} \right] \times \text{diamètre du fil (d).}$$

**3.** Amortisseur de vibrations torsionnelles selon la revendication 1 ou la revendication 2, dans lequel l'intervalle (66) entre le bout distal (46) et la spire active adjacente (64) est approximativement égal à

$$\left[ 1 - \frac{\text{surface aplatie incurvée °}}{360°} \right] \times \text{flexion des spires actives (F).}$$

**4.** Amortisseur de vibrations torsionnelles selon la revendication 1 ou la revendication 2, dans lequel l'intervalle (66) entre le bout distal (46) et la spire active adjacente (64) est approximativement égal à

$$\left[ 1 - \frac{\text{surface aplatie incurvée °}}{360°} \right] \times \text{flexion moyenne par tour de spire pour la partie de spire de transition,}$$

où la partie de spire de transition est définie entre le point de départ (54) de la surface d'extrémité aplatie incurvée (42) et le point de la spire (64) adjacent axialement au bout distal (46).

5. Amortisseur de vibrations torsionnelles selon la revendication 1, dans lequel en raison de tolérances de fabrication l'intervalle (66) doit être supérieur à

$$\left[ 1 - \frac{\text{surface aplatie incurvée maximum tolérable}°}{360°} \right] \times \begin{array}{c} \text{flexion minimum} \\ \text{tolérable (F)} \\ \text{par spire} \end{array}$$

et l'épaisseur du bout (46) doit être supérieure à

$$\left[ 1 - \frac{\text{surface aplatie incurvée maximum tolérable}°}{360°} \right] \times \begin{array}{c} \text{diamètre de fil} \\ \text{minimum (d).} \end{array}$$

6. Amortisseur de vibrations torsionnelles selon l'une quelconque des revendications précédentes, dans lequel la surface d'extrémité aplatie (42) présente une étendue incurvée comprise entre 190° et 270°.

7. Amortisseur de vibrations torsionnelles selon la revendication 6, dans lequel la surface d'extrémité aplatie (42) présente une étendue incurvée approximativement égale à 247°.

8. Amortisseur de vibrations torsionnelles selon l'une quelconque des revendications précédentes, dans lequel les parties de spire d'extrémité (44), les parties de spire de transition et les spires actives (50) s'élèvent à un nombre total de spires inférieur à un nombre entier d'une quantité inférieure à 1/4.

9. Amortisseur de vibrations torsionnelles selon la revendication 8, dans lequel ledit nombre total de spires est inférieur à un nombre entier d'une quantité approximativement égale à 1/10.

10. Amortisseur de vibrations torsionnelles selon l'une quelconque des revendications précédentes, dans lequel la surface d'extrémité aplatie (42) est positionnée de manière à être alignée axialement avec un point de contact projeté (62) au début de la partie de spire d'extrémité (44), le point de contact (62) étant le point de contact du bout (46) si la partie de spire d'extrémité (44) à un pas était projetée pour accomplir un tour de 360° et toucher le début de cette partie de spire d'extrémité (44).

11. Amortisseur de vibrations torsionnelles selon l'une quelconque des revendications précédentes, dans lequel chaque ressort à boudin (40) est monté en parallèle par rapport à chaque autre, chaque ressort à boudin (40) ayant une première partie de spire d'extrémité axiale (44) butant sur un siège de ressort (13, 23) de l'élément d'entrée de couple (2, 6, 7) et une seconde partie de spire d'extrémité axiale (44) butant sur un siège de ressort (28) de l'élément de réaction de sortie (25).

12. Amortisseur de vibrations torsionnelles selon l'une quelconque des revendications 1 à 10, dans lequel au moins deux dits ressorts à boudin (40a, 40b) sont montés en série l'un par rapport à l'autre avec une première dite partie de spire d'extrémité axiale (44) d'au moins deux de ces ressorts à boudin (40a, 40b) reposant sur un élément de siège flottant (98) interposé entre ceux-ci.

13. Amortisseur de vibrations torsionnelles selon l'une quelconque des revendications 1 à 10, dans lequel lesdits ressorts à boudin (40a, 40b) sont montés en une combinaison d'ensembles en série et en parallèle les uns par rapport aux autres, les ensembles de ressorts à boudin qui sont montés en série comportant un élément de siège flottant (98) interposé entre deux dits ressorts à boudin (40a, 40b) avec une première partie de spire d'extrémité axiale (44) de chaque ressort (40a, 40b) butant sur l'élément de siège mobile (98), les ensembles de ressorts à boudin qui sont montés en parallèle les uns avec les autres comportant une première partie de spire d'extrémité axiale (44) reposant sur un siège de ressort (82) de l'élément d'entrée (82) et une seconde partie de spire d'extrémité axiale (44) reposant sur un siège de ressort (93) de l'élément de réaction de sortie (86, 87).

FIG. 1.

FIG. 2.

FIG.3.

FIG.4.

FIG.5.

FIG.6.

FIG.10.

FIG.8.

FIG.7.

FIG.9.

EP 0 522 718 B1

FIG.11.

FIG.12.